# EUROPEAN PATENT APPLICATION

(11) **EP 1 580 440 A1**
(43) Date of publication of application: **28.09.2005**
(21) Application number: 05075592.5
(22) Date of filing: 10.03.2005
(51) Int. Cl.: F15B 19/00

(54) **Method and device for condition monitoring of a hydraulically driven tool**

(30) Priority: 24.03.2004 NL 1025801
(71) Applicant: Demolition and Recycling Equipment B.V., 5330 AB Kerkdriel (NL)
(72) Inventor: De Gier, Gertrudis Maria Gerardus, 5334 JZ Velddriel (NL)
(74) Representative: Valkonet, Rutger

(57) **Abstract**

The invention relates to a method and a device for determining the operating conditions in which a tool driven by a hydraulic piston/cylinder combination (8) is operated, wherein the piston (14a) alternately performs outward and inward operating cycles during operation under the influence of a pressurised medium being supplied via first and second supply lines, whose pressure can be adjusted within a predefined pressure range.

According to the invention, the method is characterized by the steps of i) simultaneously measuring the current medium pressure in the first and the second supply line; ii) determining which stroke cycle the piston is carrying out on the basis of the established pressure difference between the medium pressures in the first and the second supply line as measured in step i).

## Description

The invention relates to a method for determining the operating conditions in which a tool driven by a hydraulic piston/cylinder combination is operated, wherein the piston alternately performs outward and inward operating cycles during operation under the influence of a pressurised medium being supplied via first and second supply lines, whose pressure can be adjusted within a predefined pressure range.

The invention further relates to a device for determining the operating conditions in which a tool driven by a hydraulic piston/cylinder combination is used, using the method according to the invention, wherein the piston/cylinder combination is provided with a first and a second supply line for a pressurised medium, whose pressure can be set within a pressure range, for alternately imposing operating cycles on the piston during operation.

Such a method and device are disclosed in, for example, European patent publication no. 1055489. According to said European patent, the operating conditions of a hydraulic percussion tool, in particular a wrecking hammer, are determined by registering the number of strokes of the wrecking hammer during operation. In this way it is possible to determine the current phase of the life cycle of the wrecking hammer and to determine when maintenance or an overhaul is required.

The method and the device disclosed in EP 1055489 have been specially developed for use with a hydraulic percussion tool, viz. a wrecking hammer, and consequently they are of simple design and have limited possibilities as regards determining the operating conditions in which the percussion tool is used. The method and the device described therein are only capable of registering the number of impacts of the wrecking hammer.

The known method and device are not suitable for generally determining the operating conditions in which a tool driven by a hydraulic piston/cylinder combination is operated. Various kinds of tools or pieces of equipment that are driven by a hydraulic piston/cylinder combination are different from each other as regards their operating cycle, which is more complex than that of a hydraulic wrecking hammer.

Unlike the wrecking hammer, no regular pattern in the functioning of the hydraulic system that drives the tool in question can be distinguished with other, more complex hydraulic tools or pieces of equipment (for example a gripper, shears, a crusher, a cutter, etc).

Consequently it is the object of the invention to provide an improved method and device that can be used with a wide range of different hydraulic tools and by means of which a more accurate and more extensive insight into the operating situation of the tool in question can be gained, for example in order to improve the effectiveness of the maintenance work.

Essential is that the device according to the invention can function without being dependent on the basic machine on which the tool is mounted. The fact is that a hydraulic tool can be coupled to various basic machines over time, and consequently it is desirable for functional reasons that the data relating to the use and the power consumption of the tool are registered and stored in the tool itself rather than on the basic machine. Preferably, the device need not be coupled to or be dependent on the basic machine for its energy supply.

According to the invention, the method is characterized by the steps of i) simultaneously measuring the current medium pressure in the first and the second supply line; ii) determining which stroke cycle the piston is carrying out on the basis of the established pressure difference between the medium pressures in the first and the second supply line as measured in step i).

In this way it is possible to determine which stroke cycle the hydraulic tool is carrying out (outward stroke cycle = cylinder out; inward stroke cycle = cylinder in). Unlike a wrecking hammer, which has a more or less standardised operating cycle exhibiting a regular, recurring pattern, other hydraulic tools are precisely characterized by more complex operating cycles not exhibiting a regular pattern, which renders it more complex to register the operating cycles.

A piston can move very irregularly, for example, such as fast, slowly, carry out a partial stroke or be stationary for some time. A hydraulic tool, such as a gripper, will frequently open and close without being loaded, in which case the maximum operating pressures will be relatively low. On the other hand, the gripper may have to deliver its maximum force during every cycle and the number of times that very high operating pressures are reached may be high.

By measuring the pressure difference between the two medium lines in accordance with the invention, it is possible to determine the current cycle half of the cylinder. These measurements of operating pressures must be carried out simultaneously on the supply line and the discharge line in that case. The fact is that one side is the highpressure side during one cycle half, whilst return pressure prevails on the other side at that moment. Precisely the reverse situation occurs during the second cycle half.

More in particular, according to the invention the method is further characterized in that step ii) is preceded by the step of
iii) determining whether the established pressure difference between the medium pressures measured in step i) is larger or smaller than a predetermined pressure difference. By setting a specific minimum pressure difference between the two pressure measurements, the measuring system is prevented from being overly sensitive to pressure fluctuations in the hydraulic system, as a result of which the operating cycles cannot be correctly detected or counted.

The method is further characterized by the steps of
iv) dividing the pressure range of the pressurised medium into one or more subranges for every stroke cycle;
v) determining the number of times that the current pressure of the pressurised medium falls within one or more of said subranges.

This makes it possible to register the number of times that a particular pressure range (subrange) is reached. This pressure spectrum provides a more complete and accurate image as to the intensity with which the hydraulic tool (piece of equipment) in question has been used.

To obtain a clear image over a longer period, the method may according to the invention be further characterized by the step of
vi) storing the number of times as obtained in step v) in a pressure storage register.

An even more accurate image of the use of the tool can be obtained in that the method is further characterized by the step of
vii) determining and storing the operating temperature of the tool during operation, or by the step of
viii) determining and storing the length of time during which the tool has been operated.

On the other hand, the method according to the invention may be further characterized by the step of
ix) determining and storing the number of the days (daily periods) during which the tool has been used. This latter step is in particular very functional for rental organisations, which can easily determine the rental price of the rented tool in this manner.

According to the invention, the device is characterized in that a pressure sensor is mounted both in the first and in the second supply line for measuring the currently prevailing medium pressure in the first and the second supply line, wherein the device is provided with data processing means arranged for determining the pressure difference between the measured medium pressures in the first and the second supply line and for determining, on the basis of the established pressure difference, which stroke cycle has been imposed on the piston.

As already described above, it is possible, using the device according to the invention, to determine the current operating cycle of the hydraulic tool. Thus it is possible to obtain a more complete and accurate image of the intensity with which the hydraulic tool (piece of equipment) in question has been used.

In a specific embodiment, the device is further characterized in that the data processing means for determining on the basis of the established pressure difference which stroke cycle has been imposed on the piston are further arranged for determining whether the established pressure difference is larger or smaller than a preset pressure difference. The preset pressure difference prevents the measuring system from being overly sensitive to pressure fluctuations in the hydraulic system, which may lead to the operating cycles not being correctly detected or counted.

To obtain a more accurate image of the operation of the hydraulic tool, the data processing means may furthermore be arranged for dividing the pressure range of the pressurised medium into one or more subranges for every stroke cycle; and for determining the number of times that the current pressure of the pressurised medium falls within one or more of said subranges on the basis of the currently prevailing medium pressure in the first and/or the second supply line as measured by the pressure sensors.

More specifically, the data storage means are arranged for the storage in a register of the number of times as established by the data processing means that the current pressure of the pressurised medium falls within one or more of said subranges.

The registration of the number of times that a specific pressure range (subrange) is reached results in a so-called pressure spectrum, which provides an image of the intensity with which the hydraulic tool (piece of equipment) in question has been used.

An even more accurate image of the use of the tool can be obtained in that according to the invention the device is provided with a temperature sensor for measuring the operating temperature of the tool during operation.

Since the device is independently mounted on the hydraulic tool and consequently must function autonomously for a prolonged period of time, the device, in a specific embodiment thereof, is provided with a battery as a power source, as well as with setting means which automatically turn the battery on or off in dependence of the operational activity of the tool. In this way an effective power consumption is obtained, which prolongs the autonomous life of the device.

The device may furthermore be provided with transmission means for wireless transmission of the data collected by the device to a data processing device, which transmission means comprise an infrared transmission element, which element can be turned off or on by placing or removing a cover.

The invention will now be explained in more detail with reference to a drawing, in which:
Figs. 1a and 1b are views of an embodiment of the hydraulic tool according to the prior art;
Fig. 2 shows a first embodiment of a device according to the invention;
Fig. 3 shows a first aspect of the method according to the invention;
Fig. 4 shows a second aspect of the method according to the invention.

For a better understanding of the invention, like parts will be indicated by the same numerals in the description of the figures below.

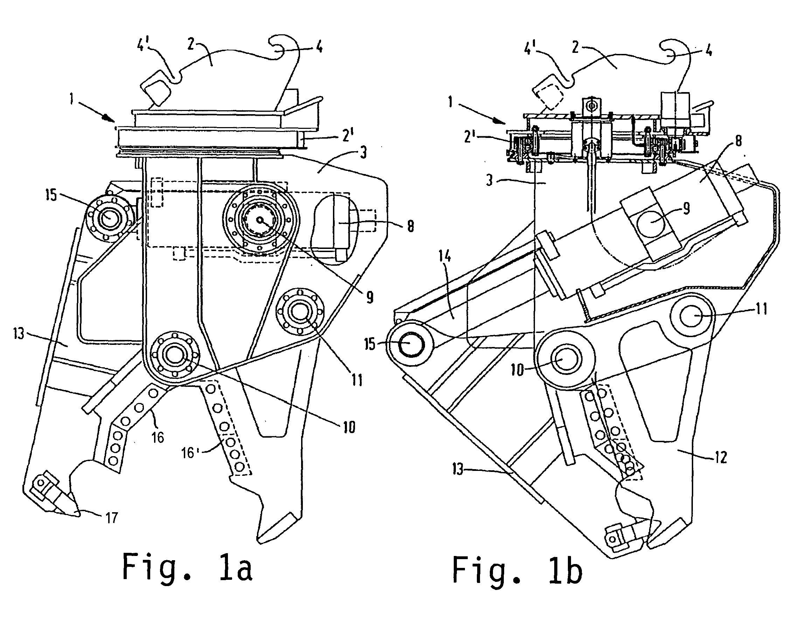

Figs. 1a and 1b are two views of a hydraulic tool that is driven or energized by a hydraulic setting cylinder. The illustrated prior art tool comprises a frame 1 including a first frame part 2, which frame part 2 is coupled to a second frame part 3 by means of a turntable 2'. The two frame parts 2 and 3 are rotatable with respect to each other by means not shown, for example hydraulically operated setting means, which are known per se.

The frame part 2 is fitted with coupling means 4, 4' that are known per se, by which the device 1 can be coupled to the end of an arm of an excavator or a similar earthmoving machine, for example.

A first jaw 12 is connected to the frame part 3 of the frame 1 by means of a pivot pin 10 and a pin 11. The two pins 10 and 11 are accommodated in corresponding openings or bores (not shown) formed in the frame part 3. Furthermore, a second movable jaw 13 can be pivoted about the pivot pin 10.

The second movable jaw 13 is pivotable with respect to the first jaw 12 by the setting cylinder 8, to which purpose the end 14a of a piston rod 14 of the setting cylinder 8 is coupled to one end of the pivotable jaw 13 by means of a pin 15. The setting cylinder 8 is pivoted in the frame part 3 about pivot point 9 so as to enable outward movement of the piston rod 14.

Fig. 1A shows the hydraulic tool in the operating situation in which the piston rod 14 is fully retracted (inward stroke), whilst Fig. 1B shows the outward stroke of the piston rod 14, by which the jaw 13 has been moved into contact with the jaw 12.

Using such a hydraulic tool, it is possible to carry out demolition, crushing or cutting operations, during which large cylinder forces can be transmitted to the jaws 12 and 13. Unlike a wrecking hammer, which has a standardised operating cycle exhibiting a regular, recurring pattern, the hydraulic tool that is shown in Figs. 1A and 1B is characterized by more complex operating cycles not exhibiting a regular pattern.

The extension rod 14 may move very irregularly, for example, such as fast, slowly, carry out a partial stroke or be stationary for some time, both during the inward stroke and during the outward stroke. The jaw 13 may frequently open and close without being loaded, in which case the maximum operating pressures in the hydraulic system (the setting cylinder 8) are relatively low. On the other hand, the jaw 13 may have to deliver its maximum force, and the number of times that very high operating pressures are reached may be high. This may take place both during the outward stroke, by which the jaw 13 is moved toward the jaw 12, and during the inward stroke, when iron frequently gets wedged between the jaws 12 and 13 (in particular between the cutting edge is 16, 16' and 17), which iron will not come loose without high cylinder forces being exerted during the inward stroke of the piston rod 14.

The manner of operation as described above renders the registration of the operating cycles - which is done in order to gain a more accurate and extensive perception of the operating situation of the tool - more complex.

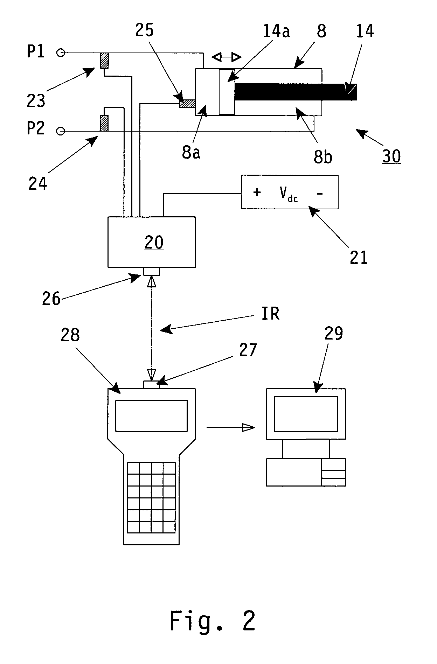

Fig. 2 shows a first embodiment of a device according to the invention for determining the operating conditions in which a hydraulic tool, for example as shown in Figs. 1A and 1B, is operated.

The device according to the invention, which is indicated at 20, is mounted on the hydraulic tool or piece of equipment, for example a gripping or cutting tool as shown in Figs. 1A and 1B. The measuring device 20 must function autonomously for a prolonged period of time, and consequently it is independently powered by a power source 21 in the form of a battery.

Numeral 30 indicates the hydraulic piston/cylinder combination as shown in Figs. 1A and 1B, for example, which show the setting cylinder 8, which accommodates a piston 14a fitted with a piston rod 14. The piston 14a divides the cylinder 8 into two cylinder chambers 8a and 8b, which are connected to a first and a second supply line P1 and P2, respectively, for a pressurised medium or fluid. The supply lines P1 and P2 are connected to the hydraulic system of, for example, an excavating machine that drives the hydraulic tool.

According to the invention, the measuring device 20 is provided with two pressure sensors 23, 24, which are mounted in the first supply line P1 and the second supply line P2, respectively. Furthermore, the measuring device 20 according to the invention is optionally provided with a temperature sensor 25, which registers the operating temperature of the hydraulic tool at a position where the operating temperature is expected to be highest, for example in the first cylinder chamber 8a of the setting cylinder 8.

When the hydraulic tool is being operated, an outward or an inward stroke can be imposed on the piston rod 14 via the supply lines P1 and P2 of pressurised medium. To impose an outward stroke on the extension rod 14, pressurised medium must be supplied to the first cylinder chamber 8A via the first supply line P1, so that the medium that is present in the second cylinder chamber 8b during the movement of the piston 14a in the cylinder 8 is returned to the hydraulic system via the supply line P2. The medium or fluid pressure that prevails in the second cylinder chamber 8b and the supply line P2 (also called the return pressure) is generally lower than the fluid pressure in the supply line P1 and the first cylinder chamber 8a.

Likewise, medium must be introduced into the second cylinder chamber 8b via the supply line P2 (high pressure) for the inward stroke of the piston rod 14, and now a lower return pressure prevails in the first cylinder chamber 8a and the supply line P1.

As already explained above, a hydraulic tool as shown in Figs. 1A and 1B may be characterized by very complex operating cycles that do not exhibit a regular pattern, and accordingly by irregular/random pressure characteristics of the medium in the supply lines P1 and P2.

To obtain an accurate and extensive perception of the operating situation in which the hydraulic tool is driven, the measuring device 20 according to the invention is arranged for measuring the current medium pressure in the first and the second supply line P1 and P2, establishing the pressure difference between P1 and P2 and determining on the basis of the established pressure difference which/cycle or operating cycle has been imposed on the piston or which operating cycle the piston is undergoing.

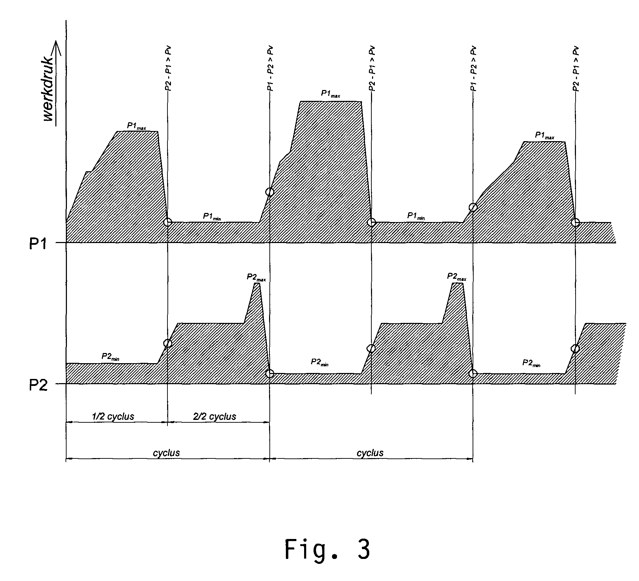

A random yet characteristic pressure trend in the supply lines P1 and P2 (and accordingly in the first and the second cylinder chamber 8a and 8b, respectively), is shown in Fig. 3. Plotted along the horizontal axis are several operating cycles, in which connection the term operating cycle is understood to mean: the full outward stroke of the piston rod 14 (1/2 cycle) and the inward stroke of the piston rod 14 (2/2 cycle).

During the outward stroke of the piston rod 14, the medium pressure in the first cylinder chamber 8a (and in the first supply line P1) slowly increases until the prevailing pressure in the supply line P1 reaches a maximum value P1ₘₐₓ. During the outward stroke of the piston rod 14 the return pressure in that prevails in the second cylinder chamber 8 b and in the second supply line P2 is minimal, as indicated P2min. During the inward stroke of the piston rod 14 the pressure in the second cylinder chamber 8b and the supply line P2 increases to P2ₘₐₓ, whilst a return pressure P1ₘᵢₙ prevails in the first cylinder chamber 8a and the supply line P1. The pressure P2 is higher than the pressure P1 and may reach a peak value, for example, shortly before the inward stroke is complete, as is indicated P2ₘₐₓ in the 2/2 cycle.

In particular during the outward stroke the maximum pressure P1ₘₐₓ may vary considerably during different (successive) operating cycles, depending on the load that the hydraulic tool (for example as shown in Figs. 1A and 1B) encounters. The extension rod 14 may move very irregularly, for example very fast of very slowly. On the other hand, it may also carry out a partial outward stroke or be stationary for some time, which may occur both during the inward stroke and during the outward stroke.

When the gripper that is shown in Figs. 1A and 1B is used, the jaw 13 may open and close a number of time without being loaded, in which case the maximum operating pressures P1ₘₐₓ are relatively low. On the other hand, situations may occur in which the jaw 3 must deliver its maximum force, which results in very high operating pressures P1ₘₐₓ. On the other hand, the pressure P2ₘₐₓ may exhibit a sudden peak during an inward stroke, for example when iron is wedged between the jaws 12 and 13 and cannot come loose without high cylinder forces being exerted during the inward stroke of the piston rod 14.

This explains why the maximum prevailing medium pressures P1 and P2 may vary with every operating cycle, as is shown in Fig. 3.

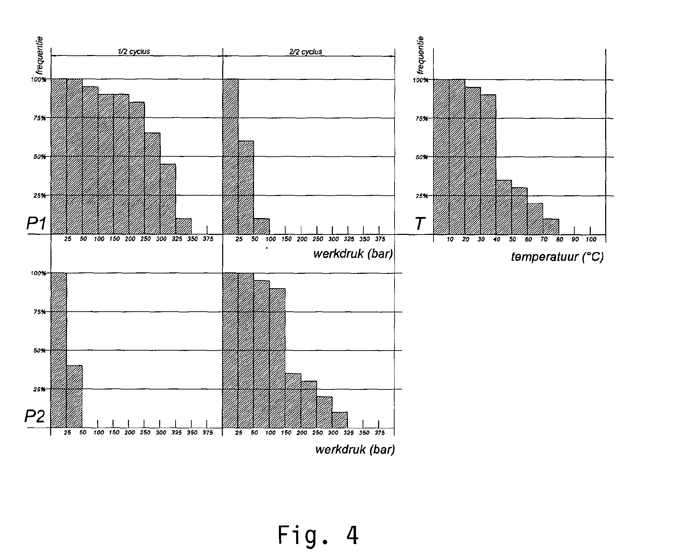

The method according to the invention is shown in Fig. 4. According to the invention, the method and the device 20 according to the invention are arranged for dividing the pressure range for both the medium pressures P1 and P2 into a number of subranges for each part of the operating cycle.

A pressure register is arranged for each subcycle, viz. the outward stroke and the inward stroke (indicated 1/2 cycle and 2/2 cycle, respectively) for each pressure medium P1 and P2, four pressure registers in total, therefore. Each pressure register is composed of a set of subranges or pressure ranges, which jointly divide the entire pressure range for P1 or P2.

When operating a hydraulic tool as shown in Figs. 1A and 1B, the maximum operating pressure that may prevail in the supply lines P1 and P2 is usually 400 bar, which pressure range is divided into a number of subranges. Each subrange or pressure range may be of the same magnitude, for example 25 or 50 bar, but the subranges may also be of a varying magnitude, as is shown in Fig. 4, in which a number of subranges equal 25 bar and 50 bar, respectively.

In the first place, the current state of the operating cycle of the extension rod 14 is according to the invention determined on the basis of the measured pressure difference P1-P2. During the outward stroke the extension rod 14 is in the 1/2 cycle, whilst during the inward stroke the extension rod 14 is in the 2/2 cycle.

The pressure difference P1-P2 is used for determining the current cycle half (1/2 cycle and 2/2 cycle, respectively) of the hydraulic tool in question. Use is made of a predetermined pressure difference Pᵥ. If the pressure difference P1-P2 is greater than Pᵥ, the tool is in the first part of the operating cycle (1/2 cycle = outward stroke). If the pressure difference P2-P1 is smaller than the predetermined pressure difference Pᵥ, the tool is in the second part of the operating cycle (2/2 cycle = inward stroke).

To register the pressures P1 and P2 both during the outward stroke (1/2 cycle) and during the inward stroke (2/2 cycle), use is made of the four pressure registers that form part of storage means incorporated in the device 20. Two pressure registers are used for the pressure P1 and P2 during the inward stroke and two pressure registers are used for the pressure P1 and P2 during the outward stroke.

Once the current phase of the operating cycle of the hydraulic tool has been determined on the basis of the detected pressure difference between P1 and P2, the absolute pressure of the medium (e.g. oil) in the first and the second supply line P1, P2 is measured by means of the pressure sensors 23 and 24, respectively. The maximum current pressure P1, P2 during the relevant phase of the cycle (1/2 cycle or 2/2 cycle) need not necessarily be equal to the maximum operating pressure that can be delivered to the hydraulic tool.

The method and the measuring device 20 are arranged for determining the number of times that the current pressure P1, P2 of the medium falls within one or more of the subranges both for the pressure range P1 and for the pressure range P2. In other words, if the maximum pressure P1 during the outward stroke (1/2 cycle) is 300 bar (as measured by the pressure sensor 23), only the pressure registers up to and including the maximum measured pressure value P1 (= 300 bar) of the set of pressure registers (P1-1/2 cycle) will be increased by 1.

Likewise it applies that if the maximum pressure P2 during the outward stroke (1/2 cycle) is 50 bar (as measured by the pressure sensor 24), only the pressure registers 0-25 bar and 25-50 bar (viz. up to and including the maximum measured pressure P2 of 50 bar) of the set of pressure registers (P1-1/2 cycle) will be increased by 1.

Likewise, during the inward stroke (the second cycle half 2/2 cycle) the minimum operating or return pressure P1 is measured by means of the pressure sensor 23, as is the maximum operating pressure P2 by means of the pressure sensor 24. If the maximum return pressure P1 during the inward stroke is 100 bar, the pressure registers 0-25 bar, 25-50 bar and 50-100 bar of the set of pressure registers (P1-1/2 cycle) will be increased by 1. Likewise it applies that if the pressure P2 during the inward stroke (2/2 cycle) is 250 bar, all the pressure registers up to and including tool is 50 bar of the set of pressure registers (P2-2/2 cycle) will be increased by 1.

Consequently, it is not the absolute pressure that is registered by means of the method and the device according to the invention, but the number of times that a specific pressure range is reached during operation of the hydraulic tool. This is graphically displayed in Fig. 4. From said figure it can be clearly derived that the medium pressure in the supply line P1 (and in the first cylinder chamber itself) during the outward stroke (1/2 cycle) mainly ranges within the pressure range of 0-300 bar in this example. Pressure peaks of P1 > 300 bar occur during less than 50% of the operating time.

The operating temperature that prevails in the first cylinder chamber 8a is measured by means of the temperature sensor 25 in an identical manner and plotted in a set of 10 temperature registers in a similar manner. Each temperature registers corresponds to the temperature range of 10°C. By measuring the operating temperature by means of the temperature sensor 25 during every inward and outward stroke, the temperature registers up to and including the measured temperature T are increased by 1 each time.

Thus a so-called pressure and temperature spectrum of the hydraulic tool can be composed, on the basis of which an accurate image as regards the intensity of the use of the tool can be obtained. Since the determined pressures P1 are mainly in the lower temperature ranges in the example of Fig. 4, it can be derived therefrom that an inward stroke is frequently imposed on the hydraulic tool in question, with an average medium pressure P1 being realised, however. On the other hand, if a large number of pressure registrations P1 are registered in the higher pressure ranges (upwards of 300 bar), it can be derived therefrom that an outward stroke is less frequently imposed on the hydraulic tool, to be true, but that the tool encounters an extremely high load pressure during said strokes. This information provides an insight into the intensity with which the tool is operated and furthermore tells the user if and when maintenance or an overhaul of the hydraulic tool is required.

To divide the pressure range into several subranges as shown in Fig. 4, the device 20 is provided with data processing means (not shown) which, in addition, also determine the pressure difference between the pressures P1 and P2 in the first and the second supply line. The absolute pressures P1 and P2 that are measured are stored in the various sets of pressure registers (P1-1/2 cycle), (P1-2/2 cycle), (P2-1/2 cycl e) and (P2-2/2 cycle) by data storage means (not shown). In the temperature register, the measured temperature during every (part of an) operating cycle is stored.

Two temperature registers may be used for the outward stroke (1/2 cycle) and for the inward stroke (2/2 cycle), respectively. This provides more measuring values and consequently more information with regard to the use of the tool.

The device 20 is fed by a current source 21, the device being arranged in such a manner that in order to minimise the power consumption, power is only carried to the various parts of the device 20, among which the pressure sensors 23 and 24 as well as the temperature sensor 25, the moment the hydraulic tool is operated by the hydraulic system of the basic machine (not shown), such as an excavating machine or a shovel.

In order to ensure an autonomous operation of the device 20 according to the invention, the power source 21 must have a long life, for example of one year. Furthermore, the measuring device 20 according to the invention needs to have sufficient storage capacity for storing all the temperature pressures that are measured in the pressure and temperature registers that are arranged for 'that purpose. The storage capacity of the measuring device 20 can be adapted on the one hand by reading out the device more often. A significant capacity change as regards the storage of the measurement data can be obtained by adapting the width of the subranges, for example, and more in particular by making use of pressure registers (and temperature registers) comprising a small number of subranges (for example 50 or 75 bar instead of 25 bar, and 20 °C or 25 °C instead of 10 °C).

It will be understood that a less accurate pressure and temperature spectrum is generated in this manner, however, which accordingly provides a less complete and less accurate image as regards the intensity with which the hydraulic tool is being used during operation.

Reading the measuring device 20 according to the invention preferably takes place by wireless means, preferably infrared (IR). To that end the measuring device 20 is provided with transmission means in the form of a reading eye 26 (infrared eye) which can be controlled by means of a reading eye 27 of a reading unit 28. The reading unit 28 can also be used for programming the measuring device 20, such as setting the pressure difference Pv, setting the subranges of the four pressure registers and the temperature register.

When the various pressure registers and the temperature register are being measured, the status of the power source 21 can be transmitted along with said data, so that it is possible to determine in time whether the power source 21 is due for replacement. Beside the pressure and temperature spectrum as determined in the pressure and temperature registers, the data processing means can also record the operating time of the hydraulic tool as well as the number of operating cycles. All these data provide a user with a clear image, from which he can determine whether the hydraulic tool is due for maintenance or an overhaul.

The reading unit 28 can read the data of several measuring devices 20 according to the invention associated with several different hydraulic tools. Subsequently, the reading unit 28 can be connected to a data processing device, for example a PC 29, in which all measurements of all the different tools are stored in a large database. Using suitable specific software installed on the PC 29, said database can be supplemented with, for example, the maintenance operations that have been carried out, the maintenance data and the costs for each tool.

From said database, valuable analyses can subsequently be obtained for use by a person responsible for said tools, e.g. of the selected tools, for each period: the service analyses (most frequent maintenance actions/costs); the analysis of the maintenance and the vials and the maintenance advice; the operational costs for each tool of a group of tools, etc.

In connection with the power consumption, the measuring device 20 is so arranged that it can be placed in a so-called dormant position when the hydraulic tool is not being operated and consequently no operating cycles are being registered. The sensors 23, 24 and 25 are not continuously supplied with a voltage by the power source 21, but they are only switched on the moment a measurement is to be carried out. Furthermore, power can be saved by covering the reading eye 26 with a cover, with the transmission means and/or the reading eye 26 only being energized, and thus requiring power, the moment the cover is removed from the reading eye 26.

## Claims

1. A method for determining the operating conditions in which a tool driven by a hydraulic piston/cylinder combination is operated, wherein the piston alternately performs outward and inward operating cycles during operation under the influence of a pressurised medium being supplied via first and second supply lines, whose pressure can be adjusted within a predefined pressure range, which method is **characterized by** the steps of
i) simultaneously measuring the current medium pressure in the first and the second supply line;
ii) determining which stroke cycle the piston is carrying out on the basis of the established pressure difference between the medium pressures in the first and the second supply line as measured in step i).

2. A method according to claim 1, further **characterized in that** step ii) is preceded by the step of
iii) determining whether the established pressure difference between the medium pressures measured in step i) is larger or smaller than a predetermined pressure difference.

3. A method according to claim 1 or 2, further **characterized by** the steps of
iv) dividing the pressure range of the pressurised medium into one or more subranges for every stroke cycle;
v) determining the number of times that the current pressure of the pressurised medium falls within one or more of said subranges.

4. A method according to claim 3, further **characterized by** the step of
vi) storing the number of times as obtained in step v) in a pressure storage register.

5. A method according to any one or more of the preceding claims, further **characterized by** the step of
vii) determining and storing the operating temperature of the tool during operation.

6. A method according to any one or more of the preceding claims, further **characterized by** the step of
viii) determining and storing the length of time during which the tool has been operated.

7. A method according to any one or more of the preceding claims, further **characterized by** the step of
ix) determining and storing the number of the days (daily periods) during which the tool has been used.

8. A device for determining the operating conditions in which a tool driven by a hydraulic piston/cylinder combination is operated, using the method according to any one or more of the preceding claims, wherein the piston/cylinder combination is provided with a first and a second supply line for a pressurised medium, whose pressure can be set within a pressure range, for alternately imposing operating cycles on the piston during operation, **characterized in that** a pressure sensor is mounted both in the first and in the second supply line for measuring the currently prevailing medium pressure in the first and the second supply line, wherein the device is provided with data processing means arranged for determining the pressure difference between the measured medium pressures in the first and the second supply line and for determining, on the basis of the established pressure difference, which stroke cycle has been imposed on the piston.

9. A device according to claim 8, **characterized in that** the data processing means for determining on the basis of the established pressure difference which stroke cycle has been imposed on the piston are further arranged for determining whether the established pressure difference is larger or smaller than a preset pressure difference.

10. A device according to claim 8 or 9, **characterized in that** the data processing means are furthermore arranged for dividing the pressure range of the pressurised medium into one or more subranges for every stroke cycle; and for determining the number of times that the current pressure of the pressurised medium falls within one or more of said subranges on the basis of the currently prevailing medium pressure in the first and/or the second supply line as measured by the pressure sensors.

11. A device according to claim 10, **characterized in that** data storage means are provided, which are arranged for the storage in a register of the number of times as established by the data processing means that the current pressure of the pressurised medium falls within one or more of said subranges.

12. A device according to any one or more of the claims 8-11, **characterized in that** the device is provided with a temperature sensor for registering the operating temperature of the hydraulic tool during operation at a position at which the operating temperature is expected to be highest.

13. A device according to any one or more of the claims 8-12; **characterized in that** the device is provided with a battery as a power source, as well as with setting means which automatically turn the battery on or off in dependence of the operational activity of the tool.

14. A device according to any one or more of the claims 8-13, **characterized in that** the device is provided with transmission means for wireless transmission of the data collected by the device to a data processing device.

15. A device according to claim 14, **characterized in that** the transmission means comprise an infrared transmission element, which element can be turned off or on by placing or removing a cover.
